# EUROPÄISCHE PATENTANMELDUNG

(11) **EP 3 869 100 A1**
(43) Veröffentlichungstag der Anmeldung: **25.08.2021**
(21) Anmeldenummer: 21157607.9
(22) Anmeldetag: 17.02.2021
(51) Int. Cl.: F23N 5/00, F23C 6/04, F23N 3/00, F23N 1/02

(54) **VERFAHREN ZUM VERBRENNEN VON BRENNSTOFF**

(30) Priorität: 20.02.2020 AT 501262020
(71) Anmelder: Ruß, Egon, 9473 Lavamünd (AT); Maggale, Anton, 9462 Bad St. Leonhard (AT)
(72) Erfinder: Ruß, Egon, 9473 Lavamünd (AT); Maggale, Anton, 9462 Bad St. Leonhard (AT)
(74) Vertreter: Beer & Partner Patentanwälte KG

(57) **Zusammenfassung**

Beim Verbrennen von Brennstoff in Form von Biomasse wird das Verhältnis zwischen der Feuerung zugeführter Primärluft, Sekundärluft und Rezirkulationsgas (Rauchgas) in unter Berücksichtigen des Gehaltes des Rauchgases an Kohlenmonoxid und an Stickstoffoxiden gewählt, wobei die Verbrennung unter reduzierenden Bedingungen durchgeführt wird, um Kohlenmonoxid in Kohlendioxid und Stickstoffoxide in Stickstoff überzuführen.

Weiters kann die Regelung des Verhältnisses zwischen Primärgas, Sekundärgas und Rezirkulationsgas unter Berücksichtigen der Feuchtigkeit des Brennstoffes gewählt werden.

## Beschreibung

Die Erfindung betrifft ein Verfahren zum Verbrennen von Brennstoff in Verbrennungsluft.

Beim Verbrennen von Brennstoff soll bei guter Leistung unter anderem der Gehalt des Rauchgases an Kohlenmonoxid (CO) und an Stickstoffoxiden (NOₓ) klein sein.

US 2008/0163803 A1 befasst sich mit dem Verbrennen von Abfall (municipal solid waste, "MSW"). Erwähnt ist, dass der Wassergehalt von MSW möglichst konstant gehalten werden soll, indem entweder Wasser oder flüssiger Abfall zugesetzt wird. Gemäß US 2008/0163803 A1 soll der Wassergehalt über die Dichte des MSW erfasst und das Verbrennen von MSW entsprechend dem erfassten Wassergehalt geregelt werden, indem die Zufuhr von MSW in den Ofen geändert wird. US 2008/0163803 A1 schlägt vor, dass einem Regler Daten betreffend die Feuchtigkeit von MSW aufgegeben werden, die dann dazu dienen, die Zufuhr von Abfall und von Luft einzustellen. US 2008/0163803 A1 lehrt weiters, dass die erfasste Feuchte des MSW herangezogen wird, um die Zufuhr von Flüssigkeit (Wasser oder flüssiger Abfall) so zu regeln, dass der Heizwert von MSW konstant gehalten wird.

Aus EP 2 770 255 A2 ist ein Verfahren zum Verbrennen von Brennstoff in Form von Biomasse, wie Holz, mit einem Wassergehalt (Feuchtigkeit) von 0 bis 60 % in einer Verbrennungsanlage mit Rost, mit Wirbelschicht oder mit Einblasfeuerung unter Zuführen von Verbrennungsluft, enthaltend Primärluft, Sekundärluft und Rezirkulationsgas (Rauchgas) bekannt. Abhängig vom erfassten Wassergehalt des Brennstoffes wird bei konstanter Leistung der Verbrennung die Menge an in der Zeiteinheit zugeführtem Brennstoff erhöht, wenn der Brennstoff einen erhöhten Wassergehalt hat oder sich der Wassergehalt erhöht. Weiters wird bei erhöhtem Wassergehalt des Brennstoffes, oder wenn sich der Wassergehalt erhöht, der Anteil an Rezirkulationsgas in der Verbrennungsluft verkleinert. Überdies wird die Temperatur der Primärluft bei höherem Wassergehalt des Brennstoffes, oder wenn der Wassergehalt ansteigt, erhöht, um bei hohem Wassergehalt hinreichende Primärluft für das Trocknen des Brennstoffes zur Verfügung zu haben.

Im Einzelnen wird bei dem aus EP 2 770 255 A2 bekannten Verfahren so vorgegangen, dass beim Verbrennen von Brennstoff in Verbrennungsluft, enthaltend Primärluft, Sekundärluft und Rezirkulationsgas, der Wassergehalt (Feuchtigkeit) des Brennstoffes erfasst wird. Das Erfassen des Wassergehaltes im Brennstoff erfolgt während dieser gelagert ist und/oder während Brennstoff der Feuerung zugeführt wird. Unter Berücksichtigen des Energiegehaltes des Brennstoffes wird für eine gewählte Leistung die Zufuhr von Brennstoff bei höherem Wassergehalt erhöht und bei niedrigerem Wassergehalt verkleinert, wobei das Verhältnis in der Verbrennungsluft zwischen Primärluft und Sekundärluft einerseits und Rezirkulationsgas anderseits in Abhängigkeit vom Wassergehalt des Brennstoffes gewählt wird. Weiters wird der Anteil an Rezirkulationsgas in der Verbrennungsluft bei höherem oder steigendem Wassergehalt des Brennstoffes verkleinert und bei kleinerem oder sinkendem Wassergehalt des Brennstoffes erhöht, und der Anteil an Primärluft und/oder Sekundärluft in der Verbrennungsluft abhängig vom erfassten Wassergehalt des Brennstoffes gewählt. Bei höherem oder steigendem Wassergehalt wird der Anteil an Primärluft erhöht und der Anteil an Sekundärluft verkleinert, wobei bei niedrigerem oder absinkendem Wassergehalt der Anteil an Primärluft verkleinert und der Anteil an Sekundärluft erhöht und die Temperatur der Primärluft und Sekundärluft in Abhängigkeit vom Wassergehalt des Brennstoffes eingestellt wird.

WO 2016/189437 A1 und DE 102006031900 A1 beschreiben jeweils Verfahren zum Verbrennen von Brennstoff in Verbrennungsluft, enthaltend Primärluft und Sekundärluft, wobei im Rauchgas der Gehalt an Kohlenmonoxid und an Stickstoffoxiden erfasst und die Luftzufuhr abhängig vom Gehalt des Rauchgases an Kohlenmonoxid und an Stickstoffoxiden gewählt wird. Bestimmte Maßnahmen, wie der Anteil an Primärluft und der Anteil Sekundärluft im Einzelnen gewählt wird, sind weder WO 2016/189437 A1 noch DE 102006031900 A1 zu entnehmen.

Beim Verbrennen von Brennstoff in Form von Biomasse, wie Holz, sind ortsspezifische, von der jeweiligen Behörde definierte Abgaswerte vorgeschrieben. Meist sind dies die folgenden drei Werte:
Stickstoffoxidgehalt
Kohlenmonoxidgehalt sowie
Reingas-Staubgehalt.

Der Erfindung liegt die Aufgabe zugrunde, ein Verfahren zu schaffen, bei dem beim Verbrennen von Brennstoff, auch wenn der Brennstoff in Form von Biomasse vorliegt, die Emission von Kohlenmonoxid (CO) und an Stickstoffoxiden (NOₓ) verringert wird.

Gelöst wird diese Aufgabe erfindungsgemäß mit einem Verfahren, das die Merkmale von Anspruch 1 aufweist.

Bevorzugte und vorteilhafte Ausgestaltungen des erfindungsgemäßen Verfahrens sind Gegenstand der Unteransprüche.

Das erfindungsgemäße Verfahren erlaubt es nicht nur, die gewünschte Leistung der Verbrennung in einer Verbrennungsanlage einzuhalten, sondern auch schädliche Emissionen (u.a. Stickstoffoxide) zu verringern, wobei Harnstoff oder Ammoniak nicht oder nur in verringerter Form (Menge) zugesetzt werden muss. Bei der Erfindung wird das Verfahren zum Verbrennen von Brennstoff unter Berücksichtigen der Gehalte an Kohlenmonoxid (CO) und Stickstoffoxiden (NOₓ) im Rauchgas so geregelt, dass die CO- und NOₓ-Werte im Rauchgas gering sind.

Das Messen des Gehaltes an Kohlenmonoxid (CO) und Stickstoffoxiden (NOₓ) kann als Einzelmessung oder Permanentmessung (kontinuierliches Messen) ausgeführt werden.

Bei dem erfindungsgemäßen Verfahren ist vorgesehen, dass im Rauchgas der Gehalt an Kohlenmonoxid und an Stickstoffoxiden erfasst wird. Dabei wird der Anteil an Primärluft und/oder Sekundärluft abhängig vom Gehalt des Rauchgases an Kohlenmonoxid und Stickstoffoxiden gewählt. Bei niedrigem oder absinkendem Gehalt des Rauchgases an Kohlenmonoxid wird der Anteil an Primärluft erhöht und der Anteil an Sekundärluft verkleinert. Bei höherem oder steigendem Gehalt des Rauchgases an Kohlenmonoxid wird der Anteil an Primärluft verkleinert und der Anteil an Sekundärluft erhöht.

Bei dem erfindungsgemäßen Verfahren wird somit das Verhältnis zwischen Primärluft, Sekundärluft und Rezirkulationsgas in Abhängigkeit von dem Gehalt an Kohlenmonoxid und Stickstoffoxiden im Rauchgas gewählt.

Wenn bei dem erfindungsgemäßen Verbrennen - wie bevorzugt - reduzierende Bedingungen eingehalten werden, kann die Reaktion

NOₓ + CO => N₂ + CO₂

ablaufen und es ergibt sich im Rauchgas eine Umwandlung von Kohlenmonoxid zu Kohlendioxid und eine Reduktion von Stickstoffoxiden zu atomarem Stickstoff (N) und in weiterer Folge zu molekularem Stickstoff (N₂), so dass die Gehalte an CO und NOₓ im Rauchgas verringert werden.

Die erfindungsgemäße Arbeitsweise erlaubt es, Rauchgaswerte an NOₓ <200 mg/Nm³ bei 6 % O₂ und einen Brennstoffausgangswert von <0,3 Gewichtsprozent einzuhalten. So kann bei der Erfindung der günstige, weil niedrige, NOₓ-Wert eingehalten werden, wobei die im Stand der Technik üblichen Betriebsmittel (wie z.B. Harnstoff) nicht oder nur in verringerter Form (Menge) zum Verringern von Stickstoffoxiden im Rauchgas eingesetzt werden müssen.

Bei dem erfindungsgemäßen Verfahren wird aufgrund einer besonderen Steuerung ohne oder mit verringerter Beigabe von zusätzlichen Stoffen (Betriebsmittel,wie Harnstoff und/oder Ammoniak) der NOₓ-Wert im Verbrennungsprozess reduziert, so dass auch im Rauchgas weniger NOₓ vorliegt. Dies gelingt erfindungsgemäß, insbesondere, wenn bei der Erfindung im Verbrennungsprozess eine reduzierende Atmosphäre aufrecht gehalten wird.

Da der Kohlenmonoxid- und Stickstoffoxid-Gehalt im Rauchgas einen wesentlichen Einfluss auf den Verbrennungsprozess hat, wird in einer Ausführungsform des erfindungsgemäßen Verfahrens sowohl die Menge als auch die Stelle der Zufuhr von Sekundärluft so gewählt, dass zu jedem Zeitpunkt ein optimales Verbrennungsresultat in Bezug auf den Gehalt an Kohlenmonoxid und Stickstoffoxiden im Rauchgas gewährleistet ist.

Durch das erfindungsgemäße Verfahren kann der NOₓ-Grenzwert auch bei Brennstoff mit höherem Stickstoffgehalt ohne Eindüsen von Harnstoff und/oder Ammoniak oder Eindüsen derselben in verringerter Form (Menge) eingehalten werden.

Dies ergibt für den Betreiber einer Verbrennungsanlage erhebliche Vorteile:
- es entfallen die Anschaffungskosten für die Entstickungsanlage,
- es entfallen weiters die ständigen Beschaffungskosten für eingesetzte Betriebsmittel, wie Ammoniak und/oder Harnstoff,
- zudem erspart sich der Betreiber wertvolle Zeit, in der die Entstickungsanlage kontrolliert und gewartet werden muss.

In einer Ausführungsform erlaubt das erfindungsgemäße Verfahren auch bei sich änderndem Wassergehalt des Brennstoffes, wie Biomasse, die vorgegebene Leistung der Verbrennung in einer Verbrennungsanlage einzuhalten.

In einer möglichen Ausführungsform des erfindungsgemäßen Verfahrens wird der Wassergehalt des eingesetzten Brennstoffes berücksichtigt. Dabei kann so vorgegangen werden, dass der Wassergehalt (Feuchtigkeit) des Brennstoffes erfasst wird, wobei das Erfassen des Wassergehaltes im Brennstoff bevorzugt erfolgt, während dieser gelagert ist und/oder während Brennstoff der Feuerung zugeführt wird. Dabei kann der Anteil an Primärluft und/oder Sekundärluft in der Verbrennungsluft abhängig vom erfassten Wassergehalt des Brennstoffes gewählt werden. Unter Berücksichtigen des Energiegehaltes des Brennstoffes wird für eine gewählte Leistung die Zufuhr von Brennstoff bei höherem Wassergehalt erhöht und bei niedrigerem Wassergehalt verkleinert. Weiters kann das Verhältnis in der Verbrennungsluft zwischen Primärluft und Sekundärluft einerseits und Rezirkulationsgas anderseits in Abhängigkeit vom Wassergehalt des Brennstoffes gewählt werden. Der Anteil an Rezirkulationsgas in der Verbrennungsluft kann bei höherem oder steigendem Wassergehalt des Brennstoffes verkleinert und bei kleinerem oder sinkendem Wassergehalt des Brennstoffes erhöht werden.

Das Erfassen des Wassergehaltes im Brennstoff erfolgt bei der möglichen Ausführungsform bevorzugt, während dieser (in einem Silo oder sonstigem Vorratsbehälter) gelagert ist und/oder während dieser der Feuerung, beispielsweise durch einen Brennstoffförderkanal, zugeführt wird.

Bei dieser möglichen Ausführungsform des erfindungsgemäßen Verfahrens können die Parameter für das Verbrennen von Brennstoff, wie die Brennstoffzufuhr und/oder der Anteil an Primärluft und/oder Sekundärluft in der Verbrennungsluft und/oder der Anteil von Rezirkulationsgas in der Verbrennungsluft und die Temperatur, mit der Primärluft und/oder Sekundärluft in den Verbrennungsraum geleitet wird, geändert werden, wenn beim (kontinuierlichen) Erfassen des Wassergehaltes des Brennstoffes, der verbrannt werden soll, eine Änderung des Wassergehaltes (der Feuchtigkeit) festgestellt wird.

So kann - um eine gleichbleibende Leistung zu erzielen -die Brennstoffzufuhr bei dieser möglichen Ausführungsform erhöht werden, wenn beim Erfassen des Wassergehaltes festgestellt wird, dass sich der Wassergehalt des zugeführten Brennstoffs erhöht. Sinngemäß kann die Brennstoffzufuhr reduziert werden, wenn der Wassergehalt des zugeführten Brennstoffs kleiner wird.

In ähnlicher Weise kann bei dieser möglichen Ausführungsform der Anteil an Primärluft erhöht werden und die Sekundärluft in der Verbrennungsluft reduziert werden, wenn beim (kontinuierlichen) Erfassen des Wassergehaltes des zugeführten Brennstoffes festgestellt wird, dass der Wassergehalt ansteigt. Sinngemäß kann der Anteil an Primärluft reduziert werden und die Sekundärluft erhöht werden, wenn der Wassergehalt des zugeführten Brennstoffs kleiner wird.

Erfindungsgemäß wird bei dieser möglichen Ausführungsform des erfindungsgemäßen Verfahrens der Anteil an Rezirkulationsgas in der Verbrennungsluft verkleinert, wenn beim (kontinuierlichen) Erfassen des Wassergehaltes im Brennstoff eine Zunahme des Wassergehaltes im Brennstoff festgestellt wird.

Auch wird bei dieser möglichen Ausführungsform des erfindungsgemäßen Verfahrens der Anteil an Rezirkulationsgas in der Verbrennungsluft erhöht, wenn beim (kontinuierlichen) Erfassen des Wassergehaltes im Brennstoff eine Abnahme des Wassergehaltes im Brennstoff festgestellt wird. Schließlich kann beim Ausführen dieser möglichen Ausführungsform des erfindungsgemäßen Verfahrens die Temperatur der Primärluft und/oder der Sekundärluft erhöht werden, wenn beim (kontinuierlichen) Erfassen des Wassergehaltes im Brennstoff festgestellt wird, dass sich der Wassergehalt im Brennstoff erhöht. Anderseits kann die Temperatur der Primärluft und/oder der Sekundärluft abgesenkt werden, wenn beim (kontinuierlichen) Erfassen des Wassergehaltes im Brennstoff festgestellt wird, dass sich der Wassergehalt im Brennstoff verkleinert.

In einer anderen möglichen Ausführungsform des erfindungsgemäßen Verfahrens kann so vorgegangen werden, dass die Verfahrensparameter (Brennstoffzufuhr und/oder Primärluft- und Sekundärluftanteil in der Verbrennungsluft und/oder Anteil an Rezirkulationsgas in der Verbrennungsluft und/oder die Temperatur von Primärluft und Sekundärluft) geändert werden, wenn der Wassergehalt, ganz gleich, ob dieser kontinuierlich oder stichprobenartig in zeitlichen Abständen erfasst wird, von einem vorgegebenen Wert für den Wassergehalt nach oben oder nach unten abweicht. Beispielsweise kann dabei vorgesehen sein, dass die Verfahrensparameter oder nur einer der vorgenannten Verfahrensparameter durch Ändern angepasst werden, wenn der Wassergehalt im zugeführten Brennstoff von 10 bis 60 % nach oben oder nach unten hin abweicht.

Bei dem erfindungsgemäßen Verfahren kann beispielsweise wie folgt vorgegangen werden:
Wenn beim Durchführen des erfindungsgemäßen Verfahrens (nur) die Kohlenmonoxid- und Stickstoffoxid-Gehalte im Rauchgas bestimmt und berücksichtigt werden, kann beispielsweise wie nachstehend beschrieben vorgegangen werden:
Es erfolgt eine Regelung des Sauerstoffgehaltes der Primärluft. Je höher der Gehalt an NOₓ im Rauchgas ist, desto mehr wird der Sauerstoffgehalt durch Beimischen von Rezirkulationsgas zur Frischluft über die Rezirkulationsklappe für Primärluft nach unten geändert. Das Regeln der Sekundärluftmenge erfolgt so, dass je höher der Wert an NOₓ im Rauchgas ist, desto weniger Sekundärluft wird zugeführt, also die Sekundärluftmenge nach unten geändert. Das Regeln der Sekundärluftverteilung in der Verbrennungszone erfolgt so, dass je höher der Wert des Gehaltes an CO im Rauchgas ist, desto mehr wird das Einleiten von Sekundärluft auf in Brennraum näher zum Rost angeordnete Einblasdüsen, also nach unten verlagert, d.h. es wird Sekundärluft in einem Bereich am Beginn der Verbrennungszone, mit anderen Worten im Brennraum weiter unten, also näher zum Rost, zugeführt.

Je höher der Gehalt an Stickstoffoxiden im Rauchgas ist, desto später wird Sekundärluft in die Nachverbrennungszone eingeführt. Dies wird so lange ausgeführt, bis der Grenzwert für den Gehalt an Kohlenmonoxid (nämlich je nach behördlicher Vorschrift, z.B. 50/100/150 mg CO/m³) überschritten wird.

Das erfindungsgemäße Verfahren kann in Verbrennungsanlagen mit Rost, mit Wirbelschicht oder mit Einblasfeuerung unter Zuführen von Verbrennungsluft, enthaltend Primärluft, Sekundärluft und Rezirkulationsgas (Rauchgas), durchgeführt werden.

Wenn beim Durchführen des erfindungsgemäßen Verfahrens auch die Feuchtigkeit des Brennstoffes berücksichtigt wird, kann beispielsweise wie nachstehend beschrieben vorgegangen werden. Beim Verbrennen von Brennstoff in Form von Biomasse, wie Holz, mit einem Wassergehalt (Feuchtigkeit) von 10 bis 60 % in einer Verbrennungsanlage mit Rost, in einer Wirbelschicht oder mit Einblasfeuerung unter Zuführen von Verbrennungsluft, enthaltend Primärluft, Sekundärluft und Rezirkulationsgas (Rauchgas) in einem Feuerraum, wird der Wassergehalt des Brennstoffes vor Eintritt in die Feuerung permanent erfasst. In Abhängigkeit vom gemessenen Wassergehalt kann das Regeln der Verbrennung vorausschauend erfolgen. Das Regeln ist somit nicht auf Abweichungen der im Brennraum oder im Rauchgas entstehenden Reaktionen angewiesen.

In einer Ausführungsform der Erfindung kann die Feuchtigkeit des Brennstoffes beim Ausführen des erfindungsgemäßen Verfahrens beispielsweise wie folgt berücksichtigt werden:
Die Zufuhr von Brennstoff und die Menge an zugeführter Primärluft wird proportional zum Feuchtigkeitswert des Brennstoffes korrigiert, d.h. erhöht oder verkleinert. Das Regeln des Sauerstoffgehaltes der Primärluft erfolgt derart, dass je trockener der Brennstoff ist, desto mehr wird der Sauerstoffgehalt der Primärluft durch Beimischen von Rezirkulationsgas zu Frischluft über die Rezirkulationsklappe der Primärluft nach unten geändert. Das Regeln der Verteilung von Sekundärluft in der Verbrennungszone erfolgt so, dass je feuchter der Brennstoff ist, desto mehr wird die Zuführung von Sekundärluft zu Beginn der Verbrennung, also meist nach unten verlagert, also dem Rost im Brennraum angenähert. Das Regeln des Sauerstoffgehaltes im Rauchgas (Regler Sekundärluft Rezirkulation) erfolgt so, dass je feuchter der Brennstoff ist, desto mehr wird das Beimengen von Frischluft über die Rezirkulationsklappe für Sekundärluft nach oben geändert.

Im Vorliegenden wird unter niedrigem Gehalt des Rauchgases an Kohlenmonoxid ein Gehalt im Bereich von weniger als 50 mg CO/Nm³ verstanden.

Im Vorliegenden wird unter höherem Gehalt des Rauchgases an Kohlenmonoxid ein Gehalt im Bereich von mehr als 50 mg CO/Nm³ verstanden.

Im Vorliegenden wird unter niedrigem Gehalt des Rauchgases an Stickstoffoxiden ein Gehalt im Bereich von weniger als 50 mg NOₓ/Nm³ verstanden.

Im Vorliegenden wird unter höherem Gehalt des Rauchgases an Stickstoffoxiden ein Gehalt im Bereich von mehr als 200 mg NOₓ/Nm³ verstanden.

Im Vorliegenden wird unter niedrigem Wassergehalt des Brennstoffes ein Wassergehalt im Bereich von 8 bis 30 Gew.-% Wasser, bezogen auf den Brennstoff, verstanden.

Im Vorliegenden wird unter höherem Wassergehalt des Brennstoffes ein Wassergehalt im Bereich von 30 bis 70 Gew.-% Wasser, bezogen auf den Brennstoff, verstanden.

Weitere Einzelheiten der Erfindung ergeben sich aus der nachstehenden Beschreibung von Ausführungsbeispielen anhand der Zeichnungen. Es zeigt
- Fig. 1: schematisch eine Anlage, in der das erfindungsgemäße Verfahren ausgeführt werden kann,
- Fig. 2: das erfindungsgemäße Verfahren als Blockschema,
- Fig. 3: eine Ausführungsform des erfindungsgemäßen Verfahrens mit Bestimmen der Feuchtigkeit des Brennstoffes als Blockschema,
- Fig. 4: in Einzelheiten eine Anlage zum Ausführen des erfindungsgemäßen Verfahrens der Ausführungsform von Fig. 3,
- Fig. 5: in Einzelheiten eine Anlage zum Ausführen des Verfahrens mit einer Nachverbrennungszone und
- Fig. 6: eine alternative Ausführungsform des Brennraumes mit einer Nachverbrennungszone.

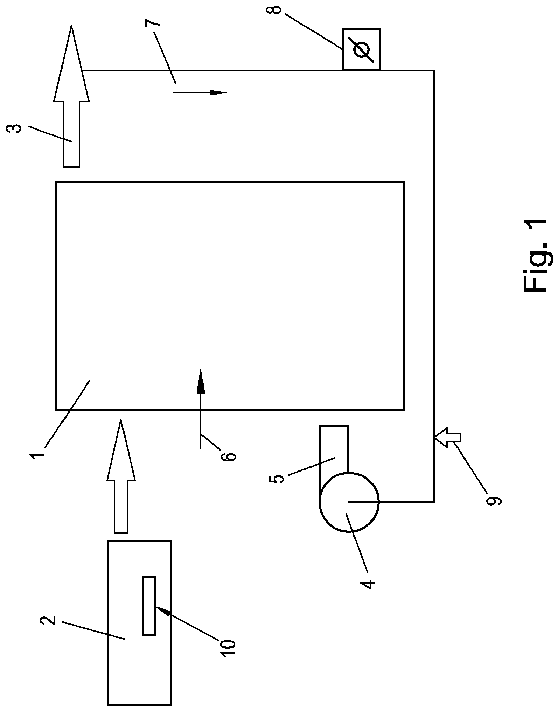

Eine in Fig. 1 schematisch gezeigte Anlage zum Verbrennen von Brennstoff, insbesondere von Biomasse (lignine oder andere Biomasse) umfasst neben der eigentlichen Feuerung 1 einen Brennstoffförderer 2, durch den Brennstoff der Feuerung 1 zugeführt wird. Rauchgas strömt aus der Feuerung 1 über einen Rauchgaskanal 3 ab. Zusätzlich wird der Feuerung 1 über einen Primärluftventilator 4 Primärluft 5 zugeführt. Ebenso ist vorgesehen, dass - bevorzugt oberhalb der Zufuhr von Primärluft - Sekundärluft über Sekundärluftdüsen 6 zugeführt wird. Primärluft und/oder Sekundärluft können über Wärmetauscher geleitet werden, um ihre Temperatur auf den jeweils gewünschten Wert einzustellen.

Im Rahmen der Erfindung ist vorgesehen, dass ein Teil des Rauchgases als Rezirkulationsgas durch eine Rauchgasrückführung, umfassend eine Leitung 7 für Rezirkulationsgas mit Regelklappe 8 und gegebenenfalls Ventilator der Verbrennungsluft, beispielsweise der Primärluft und/oder der Sekundärluft, zugemischt oder über einen eigenen Rezirkulationsventilator in die Feuerung geleitet wird. Dabei ist vorgesehen, dass der Sauerstoffgehalt im rückgeführten Rauchgas (Rezirkulationsgas) erfasst wird. Dieses Erfassen kann mit Hilfe einer Sauerstoffsonde 9, insbesondere einer Lambda-Sonde, erfolgen.

Die Messung der Gehalte an CO und NOₓ im Rauchgas erfolgt vorzugsweise mit Hilfe von Messsonden.

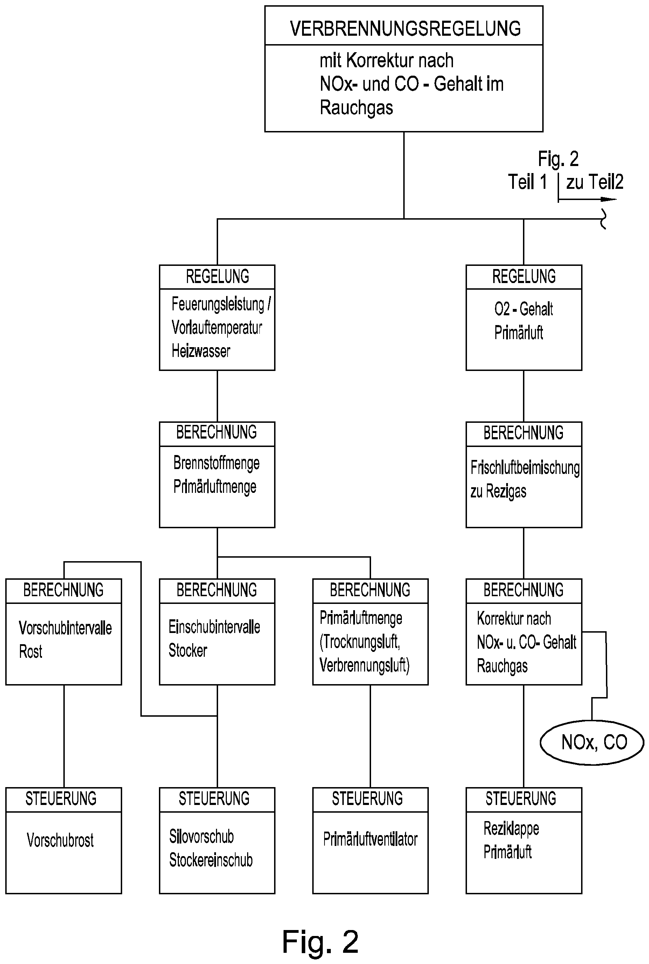

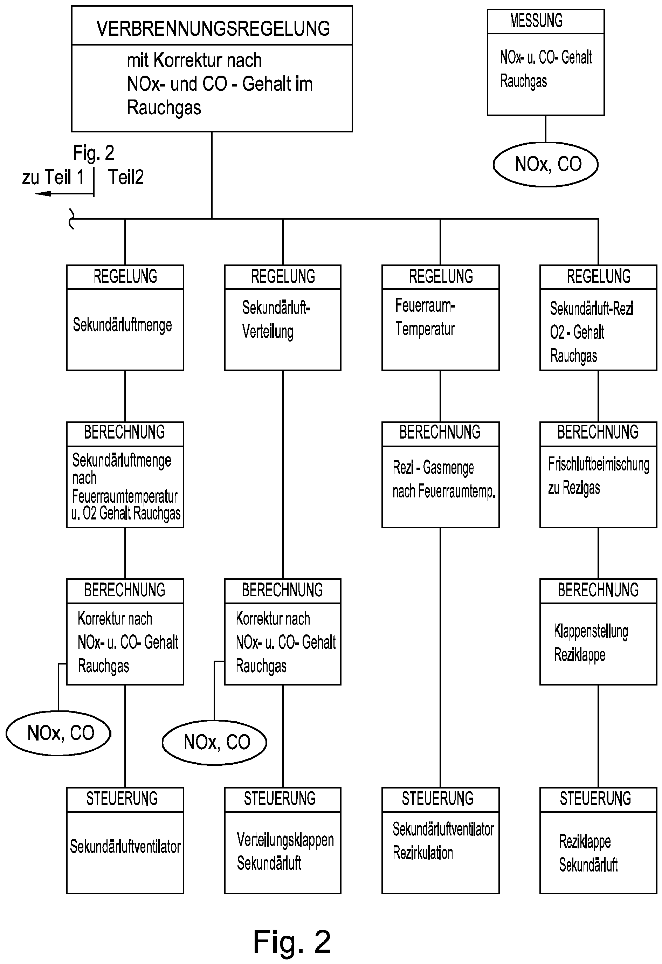

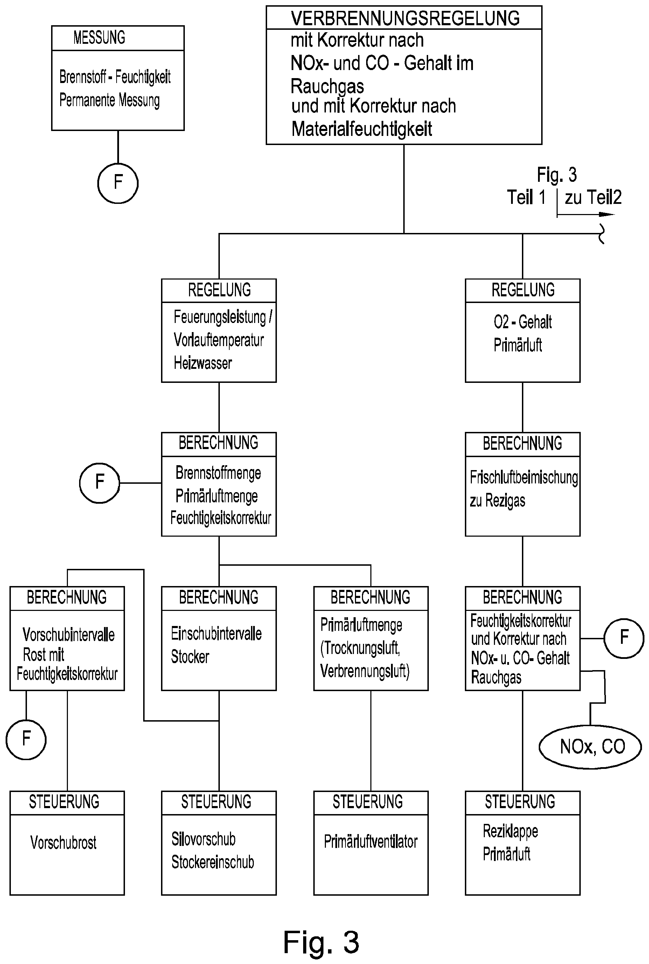

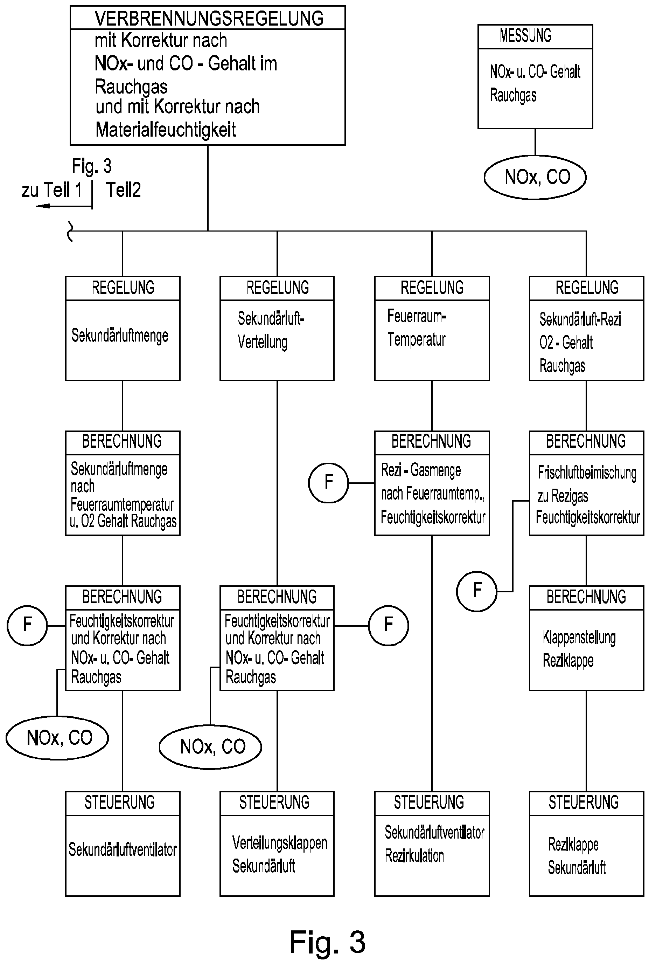

In den Blockschemata der Fig. 2 und 3 sind die besonderen Regelungen einer Verbrennungsanlage zum Ausführen des erfindungsgemäßen Verfahrens dargestellt.

Im Schema der Fig. 2 ist in einem Blockdiagramm die Messung von NOₓ und CO im Rauchgas dargestellt. In der obersten Reihe sind die einzelnen Regelungen angeführt, darunter die Berechnungen, die in diese Regelungen einfließen. In der untersten Reihe ist dargestellt, auf welche Apparaturen (Stellglieder) die Regelungen einwirken. Insbesondere ist in dem Schema der Fig. 2 gezeigt, in welcher dieser Regelungen und an welcher Stelle Korrekturen aufgrund der jeweils gemessenen Werte für den NOₓ- und CO-Gehalt im Rauchgas erfolgen.

Sinngemäße Erläuterungen gelten für die Fig. 3, wobei bei der Ausführungsform gemäß Fig. 3 nicht nur der Gehalt von Rauchgas an NOₓ und Kohlenmonoxid, sondern auch der Wassergehalt des zugeführten Brennstoffes berücksichtigt wird.

Im in Fig. 3 gezeigten Ausführungsbeispiel des erfindungsgemäßen Verfahrens wird auch der Wassergehalt des zugeführten Brennstoffs (Feuchtigkeit des Brennstoffs) beim Zuführen von Brennstoff zur Feuerung 1 gemessen. Dabei ist vorgesehen, dass die Messung mit Hilfe eines Sensors 10, insbesondere kontinuierlich, erfolgt. Zusätzlich wird der Gehalt von Stickstoffoxiden (NOₓ) und Kohlenmonoxid (CO) im Rauchgas erfasst.

Mit dem ermittelten Wert des Wassergehaltes des Brennstoffes (Materialfeuchtigkeit) wird für den jeweiligen Wassergehalt für den jeweiligen Lastzustand der Feuerung gewählt:
die Brennstoffdosierung,
die Verbrennungsluftdosierung,
Primärluft und/oder Sekundärluft,
das Rostmanagement (Rostbewegung) und
das Verhältnis zwischen Primärluft und Sekundärluft einerseits und Rezirkulationsgas anderseits.

Mit dem erfindungsgemäßen Verfahren ist es in der in Fig. 3 gezeigten Ausführungsform möglich, das gewünschte Rezirkulationsverhältnis (Verbrennungsluftgemisch bestehend aus Primärluft/Sekundärluft einerseits und Rauchgas als Rezirkulationsgas anderseits) herzustellen. Der für das vorteilhafte Verbrennen erforderliche und optimale Sauerstoffgehalt wird mit Hilfe einer Lambda-Sonde (Sauerstoffsonde 9) erfasst und der Anteil an Rezirkulationsgas in der Verbrennungsluft durch Einstellen einer Regelklappe 8 oder Betrieb eines Ventilators mit der gewünschten Leistung in Abhängigkeit vom erfassten Wassergehalt des Brennstoffs gemessen und kontinuierlich korrigiert.

Im Einzelnen kann bei der in Fig. 3 wiedergegebenen Ausführungsform wie folgt beschrieben vorgegangen werden:
Brennstoff wird über eine Fördereinrichtung 2 abhängig von der gewünschten Leistung in die Feuerung 1 transportiert.

Dabei wird der Wassergehalt des Brennstoffs (Materialfeuchtigkeit) permanent (Sonde 10) erfasst. Abhängig von der Feuchtigkeit des Brennstoffes wird die Menge an Brennstoff für die gewünschte Leistung gewählt. Dabei wird für eine vorgegebene Leistung der Feuerung 1 bei nasserem Brennstoff mehr und bei trockenerem Brennstoff weniger Brennstoff je Zeiteinheit in die Feuerung 1 gewählt. Dabei ist davon auszugehen, dass Holz einen unteren Heizwert bei 50 Gew.-% Wassergehalt von etwa 2,3 kWh/kg und bei 20 Gew.-% Wassergehalt von etwa 3,84 bis 4,02 kWh/kg hat.

Des Weiteren wird die Menge an Primärluft in Abhängigkeit vom Wassergehalt verändert, wobei so vorgegangen wird, dass bei nasserem Brennstoff ein höherer Anteil an Primärluft und bei trockenerem Brennstoff ein geringerer Anteil an Primärluft gewählt wird. Auch hier ist es vorteilhaft, das Verhältnis zwischen Wassergehalt und Heizwert zu berücksichtigen.

Weiters wird in Abhängigkeit vom Wassergehalt des Brennstoffs (Materialfeuchtigkeit) das Verhältnis zwischen Primärluft und Sekundärluft einerseits und Rezirkulationsgas anderseits (also das Rezirkulationsverhältnis) in der Verbrennungsluft festgelegt. Bei nasserem Brennstoff wird der Verbrennungsluft wenig oder gar kein Rezirkulationsgas zugemengt. Wird trockener Brennstoff verfeuert, ist ein höherer Anteil an Rezirkulationsgas möglich. Der jeweils erforderliche Anteil an Rezirkulationsgas hängt von dessen Restsauerstoffgehalt, der mit der Lambda-Sonde 9, die im Bereich der Primärluft oder Sekundärluft vorgesehen ist, gemessen wird, ab. Dabei ist ein Restsauerstoffgehalt im Bereich von beispielsweise 5 bis 21 % vorteilhaft und kann eingehalten werden.

Im einfachsten Fall kann das Rezirkulationsverhältnis mit einer Regelklappe geregelt werden, welche die Beimischung von Rezirkulationsgas zur Sekundärluft regelt.

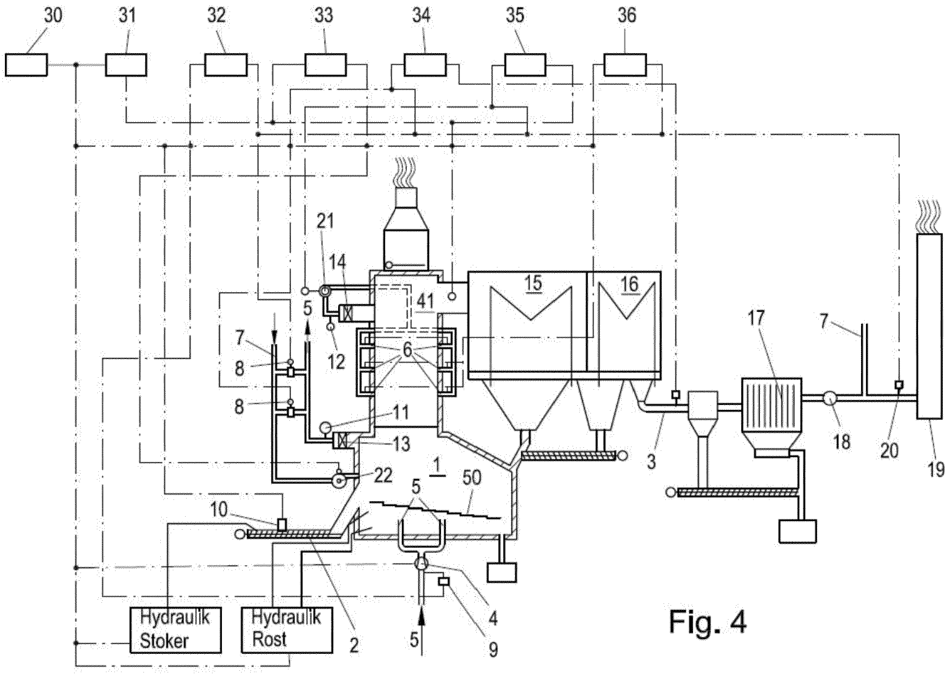

Eine weitere, beim erfindungsgemäßen Verfahren vorteilhafte Maßnahme ist das Einstellen einer maximal gewünschten Temperatur von Primärluft und/oder Sekundärluft in Abhängigkeit vom Wassergehalt des Brennstoffs (Materialfeuchtigkeit). Insbesondere wird dabei die Lufttemperatur im Bereich des Austrittes der Primärluft und/oder Sekundärluft aus einem Luftvorwärmer (Wärmetauscher 13 für das Vorwärmen von Primärluft und Wärmetauscher 14 für das Vorwärmen von Sekundärluft) gewählt und über die von den Temperaturfühlern 11 und 12 gemessenen Temperaturen korrigiert. Die in Fig. 4 gezeigte Anlage, in welcher das erfindungsgemäße Verfahren, dessen Blockschema in Fig. 3 wiedergegeben ist, durchgeführt werden kann, umfasst folgende, wesentliche Bauteile:

Einer Feuerung 1 wird über ein Gebläse 4 (Primärluftventilator) mit zugeordneter Lambda-Sonde 9 Primärluft 5 zugeführt. Brennstoff wird der Feuerung 1 über einen Brennstoffförderer 2 zugeführt, wobei dem Brennstoffförderer 2 ein Feuchtigkeitssensor 10 zugeordnet ist.

Sekundärluft wird der Feuerung 1 an mehreren Stellen durch Sekundärluftdüsen 6 zugeführt. Diese sind oberhalb der Stellen, in denen Primärluft 5 zugeführt wird, angeordnet.

In die Leitungen für die Sekundärluft mündet eine Rauchgasrückführung (Leitung 7) für Rezirkulationsgas, in der Regelklappen 8 vorgesehen sind. Zusätzlich sind den Leitungen für die Sekundärluft ein Sekundärluftventilator 21, Temperaturfühler 11 und 12 und die zwei Wärmetauscher 13, 14 zugeordnet.

Der Feuerung 1 nachgeschaltet sind im Beispiel zwei Wärmetauscher 15 und 16. Rauchgas strömt durch einen Rauchgaskanal 3, über ein Filter 17 und einen Rauchgasventilator 18 und durch einen Rauchfang 19 (Kamin) ab. Je nach Bedarf wird dem Rauchgaskanal 3 über die Leitung 7 Rauchgas als Rezirkulationsgas entnommen und der Sekundärluft zugemischt (geregelt durch die Klappen 8).

Rauchgas (Rezirkulationsgas) kann wahlweise vor oder nach dem Rauchgasventilator 18 über die Leitung 7 entnommen werden.

Nicht als Rezirkulationsgas rückgeführtes Rauchgas strömt über einen Kamin/Rauchfang 19 ab.

In Fig. 4 ist ein Sensor 20 (Mess-Sonde) dargestellt, der zwischen dem Anschluss der Leitung 7 für Rezirkulationsgas und dem Kamin 19 angeordnet ist. Mit dem Sensor 20 wird bei dem erfindungsgemäßen Verfahren das Messen des Gehaltes an Kohlenmonoxid einerseits und an Stickstoffoxiden anderseits im Rauchgas ausgeführt.

Für das Zuführen von Rezirkulationsgas ist ein Gebläse (Ventilator) 22 vorgesehen.

In Fig. 4 sind die verschiedenen Regler für die beispielhaft dargestellte Anlage zum Durchführen des erfindungsgemäßen Verfahrens in der Ausführungsform mit Bestimmung des CO- und NOₓ-Gehaltes im Rauchgas und des Feuchtigkeitsgehaltes des Brennstoffes dargestellt. Von links nach rechts sind folgende Regler vorgesehen: Vorlauftemperaturregler 30 (Leistungsregler), Vorlauftemperaturbegrenzung 31, Regler Primärluft Rezirkulation 32, Temperaturregler Feuerraum 33, Regler Sekundärluft Rezirkulation 34, Regler Sekundärluftmenge 35 und Regler Sekundärluftverteilung 36.

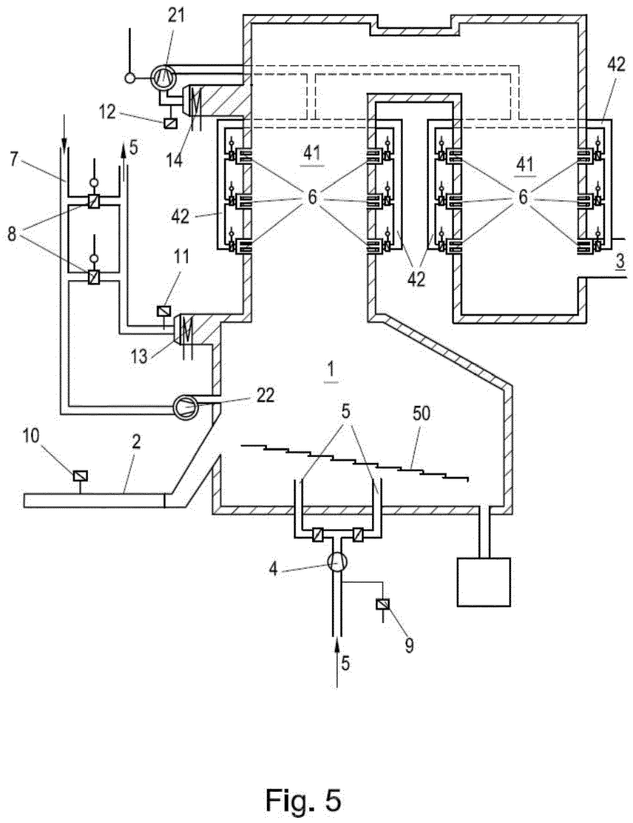

In Fig. 5 ist eine Feuerung 1 mit nachgeordneter (vertikaler) Nachverbrennungszone 41 dargestellt. Die Nachverbrennungszone 41 ist in von der Kammer mit der Feuerung 1 getrennten Kammern vorgesehen. In die Nachverbrennungskammer 41 münden Leitungen 42, durch die Sekundärluft über Sekundärluftdüsen 6 zugeführt (eingeblasen) werden kann.

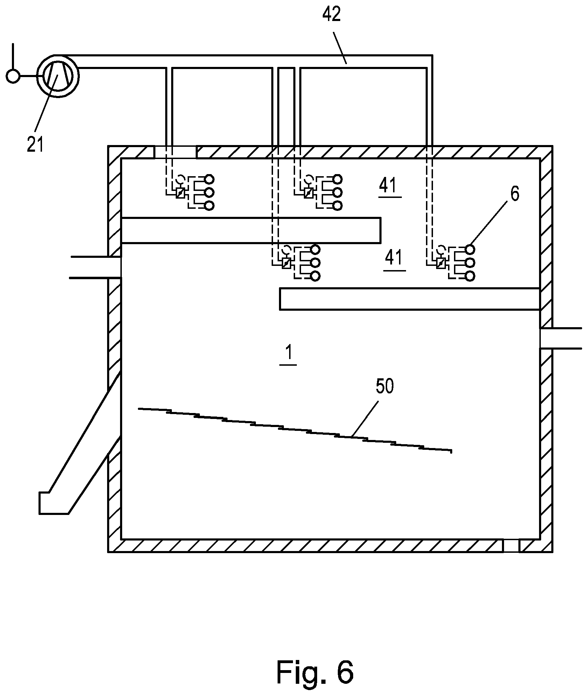

Fig. 6 zeigt eine abgeänderte Ausführungsform der Feuerung 1 mit einer (horizontalen) Nachverbrennungszone 41, die bei dieser Ausführungsform mit zwei Zügen ausgebildet ist. In den Zügen münden Leitungen 42, durch die in die Züge Sekundärluft durch Sekundärluftdüsen 6 zugeführt (eingeblasen) werden kann.

Fig. 5 und Fig. 6 zeigen, dass die Mündungen der Leitungen 42 nicht nur im Bereich der Feuerung 1, sondern auch in der Nachverbrennungszone 41 an unterschiedliche Stellen münden. Die Mündungen der Leitungen 42 haben von dem Rost 50 in der Kammer mit der Feuerung 1 verschieden große Abstände. Dies erlaubt es, in vorteilhafter Weise Sekundärluft in ausgewählten Bereichen der Verbrennungszone (Feuerung 1), insbesondere der Nachverbrennungszone 41, zuzuführen. So kann für das Aufrechterhalten der bevorzugten, weil vorteilhaften, reduzierenden Bedingungen beim Verbrennen des Brennstoffes (Umwandeln von NOₓ zu N2 unter der reduzierenden Wirkung von CO!) der für das Zuführen von Sekundärluft jeweils günstige Bereich der Verbrennungszone und Nachverbrennungszone, der für reduzierende Bedingungen beim Verbrennungsvorgang möglichst "spät", also mit größerem Abstand von dem Rost 50, liegen soll, gewählt werden.

Zusammenfassend kann ein Ausführungsbeispiel wie folgt beschrieben werden:
Beim Verbrennen von Brennstoff in Form von Biomasse wird das Verhältnis zwischen der Feuerung zugeführter Primärluft, Sekundärluft und Rezirkulationsgas (Rauchgas) unter Berücksichtigen des Gehaltes des Rauchgases an Kohlenmonoxid und an Stickstoffoxiden gewählt, wobei die Verbrennung unter reduzierenden Bedingungen durchgeführt wird, um Kohlenmonoxid in Kohlendioxid und Stickstoffoxide in Stickstoff überzuführen.

Weiters kann die Regelung des Verhältnisses zwischen Primärgas, Sekundärgas und Rezirkulationsgas unter Berücksichtigen der Feuchtigkeit des Brennstoffes gewählt werden.

## Patentansprüche

1. Verfahren zum Verbrennen von Brennstoff in Verbrennungsluft, enthaltend Primärluft, Sekundärluft und Rezirkulationsgas, **dadurch gekennzeichnet, dass** im Rauchgas der Gehalt an Kohlenmonoxid und an Stickstoffoxiden erfasst wird, dass der Anteil an Primärluft und/oder Sekundärluft abhängig vom Gehalt des Rauchgases an Kohlenmonoxid und Stickstoffoxiden gewählt wird, dass bei niedrigem oder absinkendem Gehalt des Rauchgases an Kohlenmonoxid der Anteil an Primärluft erhöht und der Anteil an Sekundärluft verkleinert wird, dass bei höherem oder steigendem Gehalt des Rauchgases an Kohlenmonixid der Anteil an Primärluft verkleinert und der Anteil an Sekundärluft erhöht wird, dass bei steigendem Gehalt an Stickstoffoxiden die Zufuhr von Sekundärluft verringert wird, bis der Grenzwert an Kohlenmonoxid überschritten wird.

2. Verfahren nach Anspruch 1, **dadurch gekennzeichnet, dass** der Wassergehalt (Feuchtigkeit) des Brennstoffes erfasst wird, dass das Erfassen des Wassergehaltes im Brennstoff erfolgt, während dieser gelagert ist und/oder während der Brennstoff einer Feuerung zugeführt wird, dass der Anteil an Primärluft und/oder Sekundärluft in der Verbrennungsluft abhängig vom erfassten Wassergehalt des Brennstoffes gewählt wird, dass unter Berücksichtigen des Energiegehaltes des Brennstoffes für eine gewählte Leistung die Zufuhr von Brennstoff bei höherem Wassergehalt erhöht und bei niedrigerem Wassergehalt verkleinert wird, dass das Verhältnis in der Verbrennungsluft zwischen Primärluft und Sekundärluft einerseits und Rezirkulationsgas anderseits in Abhängigkeit vom Wassergehalt des Brennstoffes gewählt wird und dass der Anteil an Rezirkulationsgas in der Verbrennungsluft bei höherem oder steigendem Wassergehalt des Brennstoffes verkleinert und bei kleinerem oder sinkendem Wassergehalt des Brennstoffes erhöht wird.

3. Verfahren nach Anspruch 2, **dadurch gekennzeichnet, dass** bei höherem oder steigendem Wassergehalt des Brennstoffes der Anteil an Primärluft erhöht und der Anteil an Sekundärluft verkleinert wird.

4. Verfahren nach Anspruch 2, **dadurch gekennzeichnet, dass** bei niedrigem oder absinkendem Wassergehalt des Brennstoffes der Anteil an Primärluft verkleinert und der Anteil an Sekundärluft erhöht wird.

5. Verfahren nach einem der Ansprüche 2 bis 4, **dadurch gekennzeichnet, dass** die Temperatur der Primärluft und der Sekundärluft in Abhängigkeit vom Wassergehalt des Brennstoffes eingestellt wird.

6. Verfahren nach einem der Ansprüche 1 bis 5, **dadurch gekennzeichnet, dass** das Verbrennen von Brennstoff unter reduzierenden Bedingungen durchgeführt wird.

7. Verfahren nach Anspruch 6, **dadurch gekennzeichnet, dass** Sekundärluft in die Verbrennung im Bereich des Endes der Verbrennungszone eingeleitet wird.

8. Verfahren nach Anspruch 7, **dadurch gekennzeichnet, dass** Sekundärluft in einen, vom Brennraum gesonderten Nachverbrennungsraum eingeleitet wird.

9. Verfahren nach Anspruch 7, **dadurch gekennzeichnet, dass** Sekundärluft in wenigstens einen dem Verbrennungsraum nachgeschalteten vertikalen oder horizontalen Nachverbrennungsraum eingeleitet wird.

10. Verfahren nach einem der Ansprüche 6 bis 9, **dadurch gekennzeichnet, dass** der Zeitpunkt, die Stelle und die Menge des Einbringens von Sekundärluft in Abhängigkeit vom Gehalt des Rauchgases an Stickstoffoxiden und/oder Kohlenmonoxid gewählt wird.
